# EUROPEAN PATENT APPLICATION

(11) **EP 4 850 853 A1**
(43) Date of publication of application: **09.12.2026**
(21) Application number: 26181558.3
(22) Date of filing: 28.05.2026
(51) Int. Cl.: B23Q 3/08, B25B 11/00

(54) **METHOD AND DEVICE FOR SUPPORTING A WORKPIECE**

(30) Priority: 06.06.2025 IT 202500013180
(71) Applicant: C.M.S. S.p.A., 24019 Zogno (BG) (IT)
(72) Inventor: FUMAGALLI, Davide, 24030 Valbrembo (BG) (IT)
(74) Representative: Luppi Intellectual Property S.r.l.

(57) **Abstract**

A method and device for supporting a workpiece are disclosed, wherein at least one plate-shaped member, having an upper side made of a sacrificial material, is placed on a work surface of a machining center, and a depression is generated between the plate-shaped member and the work surface so as to stabilize a position of the plate-shaped member, so that it is possible to machine by material removal a workpiece arranged on the plate-shaped member whereby said upper side can serve as a sacrificial surface.

## Description

### Background of the invention

The invention concerns a method and device for supporting a workpiece, in particular for supporting the workpiece on a work surface with a sacrificial surface, i.e., a support surface for the workpiece made of sacrificial material, i.e., a relatively soft material (often rubber or other deformable material) that can interfere with the tool performing the material removal operation on the workpiece without damaging the tool itself.

Specifically, but not exclusively, the invention can be used to advantage so that certain processes (e.g., sheet metal cutting), which are typical of a specific category of equipment, namely so-called bridge saws, can be performed on another category of equipment, namely so-called CNC machining centers.

### State of the art

A specific market requirement is to use a CNC machining center, normally used for certain operations (such as drilling, milling, boring, threading, turning, finishing, etc.), also to perform operations typical of a bridge saw (for example, cutting, milling, holes, grooves, etc., especially on slabs), generally on materials such as stone, ceramic, agglomerates, etc.

To meet the aforementioned requirement of transforming a machining center into a bridge saw, it is known to use a removable over-table (also called an over-bench), essentially consisting of a sacrificial surface or mat made of material (usually rubber) attached to a metal structure (usually hot-dip galvanized). When required, the over-table is transported (for example, by overhead crane or forklift) and positioned on the work surface (typically an aluminum bench) of the CNC machining center using a reference system (typically conical centering).

This solution, while achieving the goal of using a single device to perform machining operations that typically require two devices, can be improved in several respects. First, the removable over-table is relatively expensive to manufacture. Furthermore, the removable over-table is quite heavy and laborious to transport and precisely position, as well as being rather cumbersome to store when not in use.

Another well-known system, which allows a machining center to perform typical bridge saw operations, involves installing a device with flexible elements (typically belts) that must be tensioned on the work surface of the machining center. This second solution also has some limitations and drawbacks. Indeed, it is generally difficult to maintain the stability of the workpiece support, especially along the stress directions orthogonal to the tensioning direction. Therefore, to ensure adequate results, it is necessary to use flexible elements that are quite expensive and not always completely reliable.

### Summary of the invention

One purpose of the invention is to provide a solution capable of addressing one or more of the aforementioned limitations and drawbacks of the prior art.

One purpose of the invention is to provide an alternative solution to the problem of using a CNC machining center to perform operations typical of a bridge saw, such as cutting slabs.

One advantage is the creation of a relatively simple and inexpensive removable worktop, which is lightweight and space-saving and can be stored when not in use.

The proposed solution involves a removable worktop (or over-table) designed to be attached to a fixed work surface (specifically, the work surface of a CNC machining center) using suction, i.e., a suction cup.

The proposed solution has the advantage of exploiting the vacuum generation means (typically at least one vacuum pump and a series of suction hose connections) normally already present in a machining center.

In one example, the removable worktop (over-table) may comprise, in particular, at least one panel (e.g., a panel made of PVC or another relatively lightweight material) with a lower side featuring at least one concavity configured to create a vacuum chamber when the removable worktop is placed with its lower side on an external work surface (e.g., the fixed aluminum table of a machining center).

The panel will also feature, internally, at least one duct configured to connect the aforementioned concavity (and therefore the vacuum chamber defined between the fixed work surface and the lower side of the panel) to a vacuum supply located externally to the panel.

The upper side of the panel will be provided with a sacrificial surface, in particular a layer or panel made of sacrificial material (e.g., agglomerated rubber). The sacrificial surface may be, in particular, glued to the upper side of the panel.

The underside of the panel may be equipped, in particular, with at least one gasket to ensure the vacuum chamber is sealed.

The support plate may be configured to be re-leveled multiple times (like, for example, an agglomerated rubber panel) before needing to be replaced, thus proving to be very durable and therefore cost-effective.

One advantage is that, once the vacuum has been generated, the over-table is stable along all stress directions.

The proposed solution is particularly practical and economical also because the over-table is lightweight and quick to apply and remove.

One advantage is the considerable reduction in storage space compared to the over-table with a carpentry structure of the prior art.

One advantage is creating an over-table with a sacrificial surface constructed from removable modules that can be combined together.

This modularity allows the over-table with a sacrificial surface to be applied to only a portion of the machining center table, while currently available solutions allow the temporary removable table to be applied to the entire area of the machining center's aluminum table.

Furthermore, modularity provides a scalable solution in various formats, particularly suitable for large work surfaces (e.g., 3000 x 1500 mm) as well as smaller tables (e.g., 400 x 500 or 500 x 500 mm).

One advantage is the creation of a relatively robust removable table, which is significantly less delicate than the known device with tensioned belts.

An advantage of the proposed solution is that, if the work surface on which the over-table is to be applied is a tilting table, it is possible to load the workpiece directly onto the (rubber) support surface, which is currently not possible with the carpentry over-table of the prior art.

These purposes and advantages, and others, are achieved by a device and a method according to one or more of the claims listed below.

In one example, a method for supporting a workpiece involves placing at least one plate-shaped element, with an upper side made of a sacrificial material, on a work surface, and generating a depression between the plate-shaped element and the work surface to stabilize the position of the plate-shaped element. This allows a workpiece placed on the plate-shaped element to be machined by material removal, with the upper side acting as a sacrificial surface.

### Brief Description of the Drawings

The invention can be better understood and implemented with reference to the accompanying drawings, which illustrate exemplary and non-limiting embodiments thereof, in which:
Figure 1 is a perspective view of a machining center using a removable surface made in accordance with the present invention;
Figure 2 is a vertical front elevation view of the machining center of Figure 1;
Figure 3 is a top plan view of Figure 2;
Figure 4 shows one of the plate-shaped elements (the upper side of the element is visible on the left and the lower side on the right) used to form the removable table shown in the previous figures;
Figure 5 shows another example of a plate-shaped element (the upper side is visible on the left and the lower side on the right) that can be used to form a removable table that can be attached to the work surface of a machining center;
Figure 6 shows a possible modular composition of plate-shaped elements like the one shown in Figure 5 to form a removable table;
Figure 7 shows yet another example of a plate-shaped element (the upper side is visible at the top and the lower side at the bottom) that can be used to form a removable table that can be attached to the work surface of a machining center;
Figure 8 shows the lower side of another example of a plate-shaped element that can be used to form a removable table.

### Detailed Description

Referring to the figures above, for greater clarity and simplicity of description, similar elements of different embodiments have been indicated with the same numbering.

1 indicates a numerically controlled machining center as a whole. The machining center 1 may comprise, in particular, three, or four, or five, or six controlled machining axes, for example, three linear axes X, Y, Z plus, possibly, one or two rotary axes. The machining center 1 may comprise, in particular, a work head movable under numerical control command. The work head may comprise, in particular, an electrospindle.

The machining center 1 includes a work surface 2 or workbench. The work surface 2 may comprise, in particular, a horizontal plane. The work surface 2 may comprise, in particular, an aluminum plane. The work surface 2 may comprise, in particular, a single smooth continuous surface, or a surface with one or more discontinuous elements such as, for example, one or more strips and/or one or more grooves.

The work surface 2 may be operationally associated with a support device 3 which essentially forms, as will be better explained in the remainder of the description, a removable over-table configured to support a workpiece and which, if necessary, can be transported, positioned and fixed stably on the work surface 2 and, when no longer needed, can be easily disengaged and removed from the work surface 2.

This support device 3 (removable over-table) may be usefully applied to the work surface 2 to perform typical bridge saw operations (for example, cutting a slab with a disc), generally on materials such as stone, ceramic, agglomerates, etc., with the main purpose of using a single apparatus (in particular, the machining centre 1) to perform operations which generally require the use of two apparatuses (i.e., also a bridge saw).

The support device 3 in question is applied to the work surface 2 by suction, i.e. like a suction cup, using the vacuum generation means (generally at least one vacuum pump and a series of suction tube connections) with which a machining center is normally already equipped.

The support device 3 comprises at least one plate-shaped element 4 with an upper side 5 made of a sacrificial material, i.e. a soft and/or deformable material capable of defining a sacrificial surface that can interfere with the tool performing the material removal process without damaging the tool itself, being much less hard than the tool.

The sacrificial material essentially consists of a relatively soft material, for example an elastomeric material (for example a layer of rubber, in particular agglomerated rubber), so that the processing tool (for example a cutting disc for cutting a slab) is not damaged.

The plate-shaped element 4 has a lower side 6 (where "upper" and "lower" refers to the position of use when the plate-shaped element 4 is applied to the work surface 2) configured to be supported on an external work surface, in this specific case on the work surface 2 of the machining centre 1.

The lower side 6 may have, in particular, at least one concavity 7 intended, as will be better explained in the following description, to delimit a vacuum chamber (created between the plate-shaped element 4 and the work surface 2) suitable for stabilizing the position of the support device 3 on the work surface 2.

The plate-shaped element 4 is provided with at least one suction port 8 connected to the concavity 7 via a suction channel 9 (the end hole of the suction channel 9 that flows into the concavity 7 is visible in the attached figures)) obtained inside the plate-shaped element 4.

The suction port 8 is configured for connection to a vacuum supply so as to be able to generate a vacuum in the vacuum chamber that will be delimited by the aforementioned concavity 7 when the lower side 6 of the plate-shaped element 4 is placed on the work surface 2.

The vacuum supply may comprise, in particular, a vacuum pump (for example, the vacuum pump generally present in a CNC machining centre) and at least one manifold 10 (also generally already present in a CNC machining centre) with a series of connections for a plurality of suction pipes 11. The suction pipes 11 may comprise, in particular, flexible hoses.

The plate-shaped element 4 may comprise, in particular, a rigid panel made of plastic material, for example PVC, although it is possible to envisage the use of other suitable materials to create a (relatively lightweight) rigid panel. The plate-shaped element 4 may comprise, for example, a rigid panel made of aluminum or an aluminum alloy or another material (metallic or non-metallic), in particular with a specific weight of less than 4.5 g/cm³.

The plate-shaped element 4 may comprise, in particular, a multilayer structure. The upper side 5 of the plate-shaped element 4 may be arranged, in particular, on a top layer of the multilayer structure. This top layer is made of the sacrificial material. The top layer may be, in particular, glued to a layer below. The layer below may comprise, in particular, the aforementioned rigid panel (made of plastic or other material).

The sacrificial material may comprise, in particular, a material softer than the material (e.g., aluminum) of the work surface 2. The sacrificial material may comprise, in particular, an elastomeric material (e.g., agglomerated rubber or a compound based on agglomerated rubber).

The support device 3 may comprise, in particular, at least one suction tube 11 connectable, on one side, to the vacuum supply (to the manifold 10 in turn connected to the vacuum pump) and connected, on the opposite side, to the suction port 8 in turn connected to the vacuum chamber defined between the concavity 7 on the lower side 6 of the plate-shaped element 4 and the work surface 2.

The support device 3 may comprise, in particular, a set of two or more (three, or four, or five, or six, or more than six, even of different sizes) plate-shaped elements 4. This set of plate-shaped elements 4 creates a modular system composed of various elements that can be positioned next to each other on the work surface 2 (a sort of modular tiled floor).

Each plate-shaped element 4 (tile) of the aforementioned assembly (or modular system) has, like the single element described above, an upper side 5 made of a sacrificial material, a lower side 6 configured to rest on the work surface 2, at least one concavity 7 obtained in the lower side 6, and at least one suction port 8 connected to the aforementioned concavity 7 via a suction channel 9 obtained internally in the respective plate-shaped element 4.

Each suction port 8 is configured for connection to the aforementioned vacuum supply (via a respective suction tube 11) so as to be able to generate a vacuum in a respective vacuum chamber delimited by the concavity 7 when the lower side 6 is placed on the work surface 2. This allows, in practice, to achieve a vacuum suitable for ensuring high stability on the work surface 2 for all the plate-shaped elements 4 of the modular system.

It is possible to envision embodiments in which a single suction pipe can also supply two or more plate-shaped elements 4 fluidically connected in series, for example by means of T-fittings or similar connections.

The various plate-shaped elements 4 may, in particular, be coupled laterally to one another (to create a sort of actual flooring for the workpiece) by means of coupled reference elements, in particular (as in these examples) by means of pin-hole pairs 12. It is, however, possible to envision other interlocking shapes between adjacent plate-shaped elements 4.

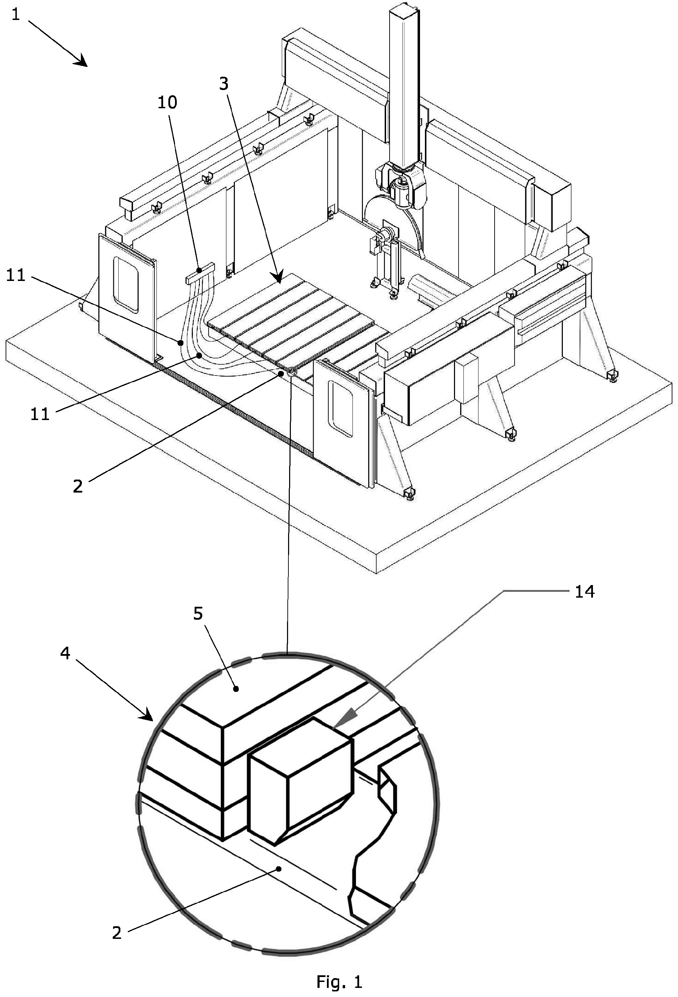

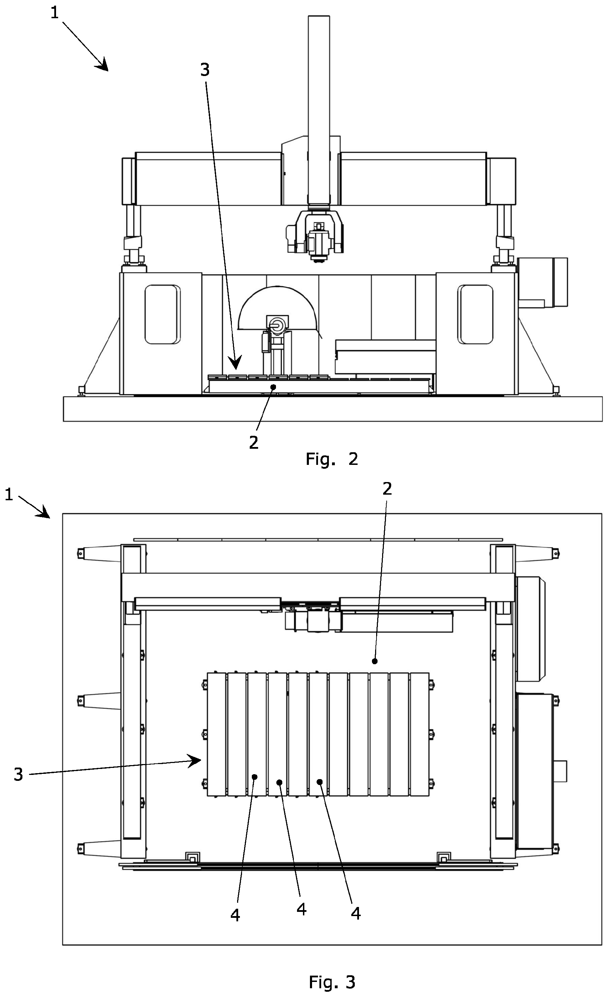

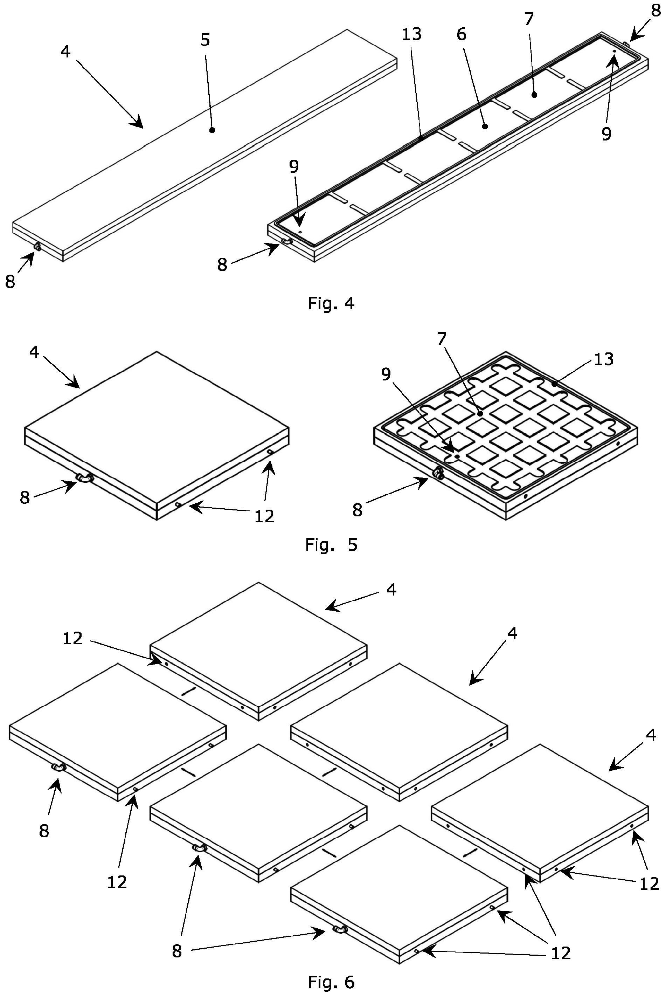

Figure 4 shows one of the plate-shaped elements 4 (rectangular in plan) used to form the support device 3 of Figures 1-3. Figure 5 shows a plate-shaped element 4 (square in plan) used to form the support device 3 of Figure 6, in which the various plate-shaped elements 4 are depicted in an assembly stage of the device.

It is possible to provide, as in these examples, that the lower side 6 of the plate-shaped element 4 has some reliefs (for example in the form of ribs or ridges as in Figure 4, or in the form of a grid as in Figure 5) positioned in the concavity 7 so as to increase the rigidity of the plate-shaped element 4 and at the same time maintain the continuity of the vacuum chamber which during use makes the plate-shaped element 4 adhere stably to the work surface 2.

The support device 3 may comprise, in particular, at least one gasket 13 arranged on the lower side 6 of the plate-shaped element 4. Each gasket 13 may be, in particular, extended in a closed ring around a respective concavity 7 so as to guarantee the hermetic seal in the vacuum chamber delimited by the concavity 7 itself when the lower side 6 is placed on the work surface 2. Each gasket 13 may comprise, in particular, at least one gasket 13 positioned on the lower side 6 of the plate-shaped element 4. In particular, an element external to the plate-shaped element 4 and applicable from the outside onto the plate-shaped element 4 (for example, a ring made of elastomeric material), or it could be an element integrated with the plate-shaped element 4, for example a protuberance that emerges from the plate-shaped element 4 and made in one piece with the latter.

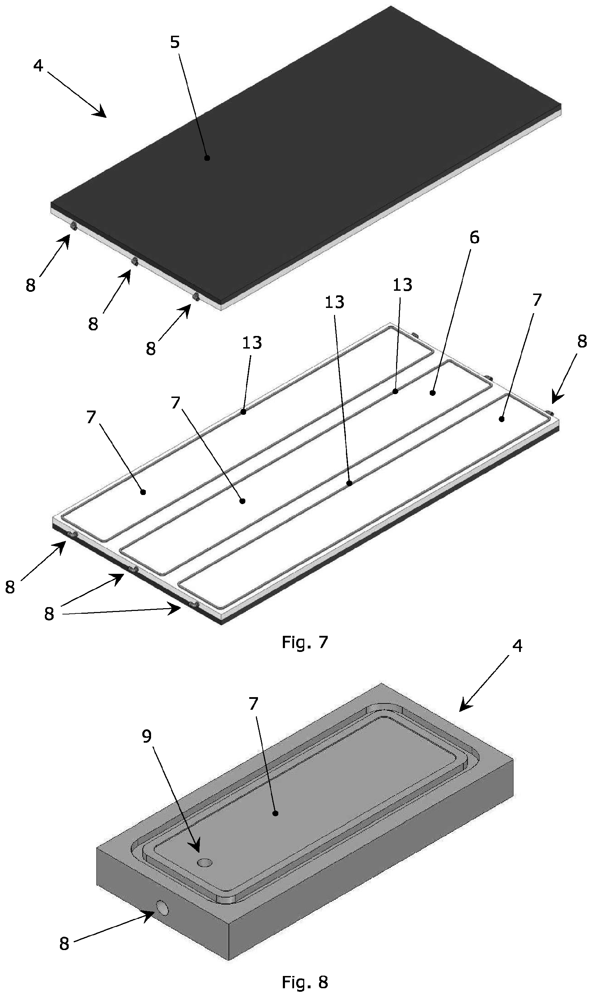

It is possible to foresee, as in the example of Figure 7, that the lower side 6 of the plate-shaped element 4 has two or more than two (three, or four, or more than four) concavities 7 and that, furthermore, it is provided with two or more than two suction ports 8 (so that each concavity 7 is associated with at least one suction port 8). Each suction port 8 can be connected to a respective concavity 7 via a respective suction channel 9 formed internally within the plate-shaped element 4. In the example shown in Figure 7, two suction ports 8 (arranged on two opposite sides of the plate-shaped element 4) are provided for each concavity 7. If a suction port 8 is not connected to the vacuum supply, it can be closed.

If two or more separate concavities 7 are provided in the same plate-shaped element 4, two or more gaskets 13 can be arranged on the lower side 6 of the same, each of which extends in a closed ring around a respective concavity 7 to ensure the hermetic seal of each vacuum chamber.

Figure 8 shows a plate-shaped element 4 in which a gasket seat is visible, consisting in this example of a closed, annular-shaped groove surrounding a concavity 7. The gasket seat is arranged on the underside of the element and is designed to receive a gasket.

The support device 3 may comprise, in particular, at least one reference element 14 arranged in a precise position on the work surface 2 so that a plate-shaped element 4 can be positioned precisely and conveniently on the work surface 2 by means of contact of the plate-shaped element 4 with a lateral abutment against the reference element 14 (see enlargement of Figure 1).

The reference element 14 may comprise, in particular, a reference block arranged to align a plate-shaped element 4 with at least one element (for example, a strip and/or a recess) of the work surface 2.

The support device 3 may be used to implement a method for supporting a workpiece.

Such a method may comprise, in particular, the step of providing at least one plate-shaped element 4 with an upper side 5 made of a sacrificial material and the step of positioning said plate-shaped element 4 on a work surface 2, for example a surface made of a material harder than the sacrificial material.

As seen, the softer sacrificial material of the upper side 5 of the plate-shaped element 4 may comprise an elastomeric material and the harder material of the work surface 2 may comprise aluminum.

The method may comprise, in particular, the step of generating a depression between the plate-shaped element 4 and the work surface 2 so as to stabilize a position of the plate-shaped element 4 above the work surface 2.

The method may comprise, in particular, the step of machining by material removal a piece arranged on the plate-shaped element 4 so that the upper side 5 of the element itself can act as a support surface.

The step of generating a vacuum may comprise, in particular, connecting at least one suction tube 11, on one side, to a vacuum supply and, on an opposite side, to a suction port 8 arranged on the plate-shaped element 4.

The suction port 8 may be connected to a lower side 6 of the plate-shaped element 4 via at least one suction channel 9 formed internally within the plate-shaped element 4.

The method may comprise, in particular, the step of providing a plurality of plate-shaped elements 4 in such a way as to create a modular system of elements that can be positioned next to each other on the work surface 2.

The method may comprise, in particular, the step of interposing at least one gasket 13, in particular a closed-ring gasket 13, between the plate-shaped element 4 and the work surface 2 to ensure the hermetic seal of the vacuum. generated between the plate-shaped element 4 and the work surface 2.

It is possible to provide for the plate-shaped element 4 to be positioned on the work surface 2 by means of a contact of the plate-shaped element 4 with a lateral abutment against a reference element 14 arranged on the work surface 2. This reference element 14 may comprise, as seen, a small block arranged to act as a stop to align the plate-shaped element 4 with at least one element of the work surface 2, for example with a strip or a groove of the work surface 2.

Thanks to the solution proposed here, it is possible to use a single apparatus (the machining center 1) to perform multiple machining operations, in particular machining operations that require the presence of a sacrificial surface and machining operations that do not require such a presence.

The solution in question allows for a quick and easy transition from a relatively hard and rigid work surface (the aluminum work surface 2 of the machining center 1) to a relatively soft and deformable work surface (the sacrificial material work surface of the transportable support device 3).

The support device 3 allows for the formation of a work surface in a simple and immediate manner, using at least one sort of suction cup "tile," or a modular system consisting of several suction cup "tiles."

In the specific example, each plate-shaped element 4 is a multilayer structure with at least one upper layer made of soft and/or deformable material (for example, a layer of elastomeric material with a thickness of between 10 and 50 mm) and a lower layer made of more rigid material, for example plastic material, in particular a more rigid lower layer with a thickness of between 10 and 50 mm, for example 30 mm. The lower stiffening layer can be made, for example, of rigid PVC or another material with similar flexibility. The lower layer can provide adequate rigidity to the plate-shaped element 4 while being constructed of a relatively lightweight material, for example, rigid PVC or another material with similar density.

It is also possible, as seen, to provide sealing means (one or more gaskets 13) to ensure the vacuum chamber is airtight.

When a vacuum is generated in the vacuum chamber defined inside the gasket 13 between the work surface 2 and the lower layer of the plate-shaped element 4, the latter (more flexible) adheres to the work surface 2 (more rigid). The possible choice of a relatively flexible material (for example, a plastic such as PVC or another material of similar flexibility) to create the lower layer allows the plate-shaped element 4 to adapt to the geometry of the work surface 2 even if the latter, as can sometimes happen, is not perfectly flat.

The dimensions of each plate-shaped element 4 can be designed according to the specific processing requirements.

The overall structure of the support device 3 is remarkably light, simple and economical, easily transportable, relatively compact and practical to store when not in use.

It should be noted that the bearing surface on the upper side 5 of the plate-shaped element 4 may be made so that it can be flattened even multiple times, ensuring a considerable service life.

It should also be noted that, in general, it is possible to adapt the shape of the plate-shaped element 4 to the work surface 2 on which it will be applied. In particular, if the work surface 2 has raised surfaces (for example, the aforementioned strips), the plate-shaped element 4 may have corresponding recesses.

Each plate-shaped element 4 may be made, in particular, from a multilayer structure. However, it is possible to envisage that each plate-shaped element 4 be made from a single-layer structure, for example, a single piece made of a material (for example, agglomerated rubber) suitable for acting as a sacrificial material and for simultaneously providing the support device 3 with sufficient rigidity and robustness to ensure the stability of the piece during processing.

It has been found (by way of example and not limitation) that a plate-shaped element 4 with an upper side 5 made of agglomerated rubber can effectively perform the functions of a sacrificial surface with an extension of approximately 2 m² (for example, a 1000 x 2000 mm plate) and even greater, considering that the dimensional constraints in practice can be determined mainly by the formats of the raw elements available on the market (generally, for expanded PVC the limit is 3000 x 1500 mm, while for agglomerated rubber it is 2000 x 1000 mm).

For example, it is possible to create a sacrificial plane by applying a certain number of agglomerated rubber tiles (e.g., 500 x 500 mm square tiles) to a relatively large PVC panel (e.g., a 3000 x 1500 mm rectangular panel).

It is observed that, once the vacuum is applied, the plate-shaped element 4 is stable along all stress directions.

## Claims

1. Method for supporting a workpiece, comprising the following steps: providing at least one plate-shaped element (4) with an upper side (5) made of a sacrificial material, in particular a material softer than a tool that will perform a material removal operation on the workpiece; positioning said at least one plate-shaped element (4) on a work surface (2); generating a depression between said at least one plate-shaped element (4) and said work surface (2) so as to stabilize a position of said at least one plate-shaped element (4) above said work surface (2); machining by material removal a workpiece arranged on said at least one plate-shaped element (4) for which said upper side (5) acts as a sacrificial surface.

2. Method according to claim 1, wherein said step of generating a vacuum comprises connecting at least one suction tube (11), on one side, to a vacuum supply and, on an opposite side, to a suction port (8) arranged on said plate-shaped element (4).

3. Method according to claim 2, wherein said suction port (8) is connected to a lower side (6) of said plate-shaped element (4), in particular to a concavity (7) on said lower side (6), via at least one suction channel (9) formed internally to said plate-shaped element (4).

4. Method according to any one of the preceding claims, wherein said step of providing at least one plate-shaped element (4) comprises providing a plurality of plate-shaped elements (4) so as to create a modular system of elements that can be positioned next to each other on said work surface (2).

5. Method according to any one of the preceding claims, comprising the step of interposing at least one gasket (13), in particular extending as a closed ring, between said at least one plate-shaped element (4) and said work surface (2).

6. Method according to any one of the preceding claims, wherein said at least one plate-shaped element (4) comprises a rigid panel made of plastics, in particular PVC, and/or wherein said at least one plate-shaped element (4) comprises a lower side (6) in which a concavity (7) is obtained which, when said at least one plate-shaped element (4) is placed on said work surface (2), delimits a vacuum chamber.

7. Method according to any one of the preceding claims, wherein said at least one plate-shaped element (4) is positioned on said work surface (2) by means of a contact of said at least one plate-shaped element (4) with a lateral abutment against a reference element (14) arranged on said work surface (2); said reference element (14) comprising, in particular, a block arranged to act as a stop for aligning said at least one plate-shaped element (4) with at least one element, in particular a strip or a groove, of said work surface (2).

8. Device for supporting a workpiece, comprising at least one plate-shaped element (4) with an upper side (5) made of a sacrificial material, i.e. a deformable material suitable for defining a sacrificial surface for material removal operations, and with a lower side (6) configured to be supported on an external work surface (2), said lower side (6) having at least one concavity (7) and said at least one plate-shaped element (4) being provided with at least one suction port (8) connected to said at least one concavity (7) via at least one suction channel (9) obtained internally to said at least one plate-shaped element (4), said at least one suction port (8) being configured for connection to a vacuum supply so as to be able to generate a depression in a vacuum chamber intended to be delimited by said concavity (7) when said lower side (6) is supported on the external work surface (2).

9. Device according to claim 8, wherein said at least one plate-shaped element (4) comprises a panel made of plastics, in particular PVC, and/or wherein said at least one plate-shaped element (4) comprises a multilayer structure with a top layer which has said top side (5) and which is made of said sacrificial material.

10. Device according to claim 8 or 9, wherein said sacrificial material comprises an elastomeric material, for example agglomerated rubber, or another material softer than aluminum.

11. Device according to any one of claims 8 to 10, comprising at least one suction tube (11) connectable, on one side, to a vacuum supply and connected, on an opposite side, to said suction port (8).

12. Device according to any one of claims 8 to 11, comprising a set of two or more plate-shaped elements (4) which forms a modular system of elements that can be placed next to each other on the external work surface (2), each of said two or more plate-shaped elements (4) having an upper side (5) made of a sacrificial material, a lower side (6) configured to rest on the external work surface (2), at least one concavity (7) obtained in said lower side (6), and at least one suction port (8) connected to said at least one concavity (7) via at least one suction channel (9) obtained internally to the respective plate-shaped element (4), each of said suction ports (8) being configured for connection to the vacuum supply so as to be able to generate a depression in a respective vacuum chamber intended to be delimited by said concavity (7) when said lower side (6) is rested on the external work surface (2).

13. Device according to claim 12, wherein said two or more plate-shaped elements (4) can be coupled laterally to each other by means of coupled reference elements, in particular by means of pin-hole pairs (12).

14. Device according to any one of claims 8 to 13, wherein:
- said device comprises at least one gasket (13) arranged on said lower side (6) and extending in a closed ring around said at least one concavity (7) so as to ensure the hermetic seal in the vacuum chamber delimited by said concavity (7) when said lower side (6) is placed on the external work surface (2); and/or
- said lower side (6) of said at least one plate-shaped element (4) has two or more concavities (7) and is provided with two or more suction ports (8) each of which is connected to a respective concavity (7) via a respective suction channel (9) obtained internally to said at least one plate-shaped element (4); on said lower side (6) being arranged, in particular, two or more gaskets (13) each of which is extended in a closed ring around a respective concavity (7); and/or
- said device comprises a reference element (14) arranged on the work surface (2) so that said at least one plate-shaped element (4) can be positioned on the work surface (2) by means of a contact of said at least one plate-shaped element (4) in lateral contact against said reference element (14); said reference element (14) comprising, in particular, a reference block arranged to align said at least one plate-shaped element (4) with at least one element of the work surface (2).

15. Use of a device according to any one of claims 8 to 14 to implement a method for supporting a workpiece, said method being according to any one of claims 1 to 7.
